# EUROPEAN PATENT SPECIFICATION

(11) **EP 1 385 760 B1**
(45) Date of publication and mention of the grant of the patent: **26.10.2005**
(21) Application number: 02707370.9
(22) Date of filing: 13.03.2002
(51) Int. Cl.: B65G 1/06, B66F 9/18

(54) **MATERIAL HANDLING SYSTEM**
MATERIALFLUSSSYSTEM
SYSTEME DE MANIPULATION

(30) Priority: 23.03.2001 SE 0101049; 11.03.2002 SE 0200726
(43) Date of publication of application: 04.02.2004
(73) Proprietor: Compact Logistic System I Smalandsstenar AB, 333 30 Smalandsstenar (SE)
(72) Inventor: ANTONSSON, Rickard, S-310 83 Unnaryd (SE); STEGERLING, Hakan, S-333 32 Smalandsstenar (SE)
(74) Representative: Nilsson, Lennart
(86) International application number: PCT/SE2002/000469
(87) International publication number: WO 2002/076860

(56) References cited:
- EP-A1- 0 153 424
- DE-A- 4 228 809
- US-A- 4 279 563

## Description

The present invention relates to an arrangement according to the preamble to appended claim 1.

In DE-A-42 28 809 is disclosed a material handling system of the above mentioned type.

The use of material handling systems of the above-mentioned type is steadily increasing, as the realisation is growing as to the advantages thereof, in particular regarding savings of personnel and space, and also that the requisite personnel may carry out their work in an extremely ergonomically correct manner. However, it is desirable to improve such material handling systems, above all in a direction towards greater efficiency, so that the picking speed and storage space may be increased. Further, it is desirable to the able to improve the ergonomics in connection with the use of such material handling systems.

The task forming the basis of the present invention is to satisfy the above-mentioned needs in a material handling system of the type disclosed by way of introduction.

This task is solved according to the present invention in that the arrangement indicated by way of introduction has been given the characterising features in the appended claims.

The present invention realises an arrangement which permits increased picking speed and greater storage space and a considerably more efficient utilisation of a material handling system without any inconveniences whatever. The present invention further realises an arrangement which greatly improves the labour ergonomics. As a result of the present invention, the picking depth is reduced in an extremely simple manner by as much as 50% without the load depth being reduced. As a result of the reduction of the picking depth, a considerable reduction is also made possible of the work opening in the material picking position. This further entails that the work opening proper may be lowered in that the personnel do not need to lean into the working opening in order to reach material furthest in on the picking tray. The requisite space for the material picking position can thus be considerably reduced and utilised in different desired ways, for example for placing electronics and/or further material carrying trays.

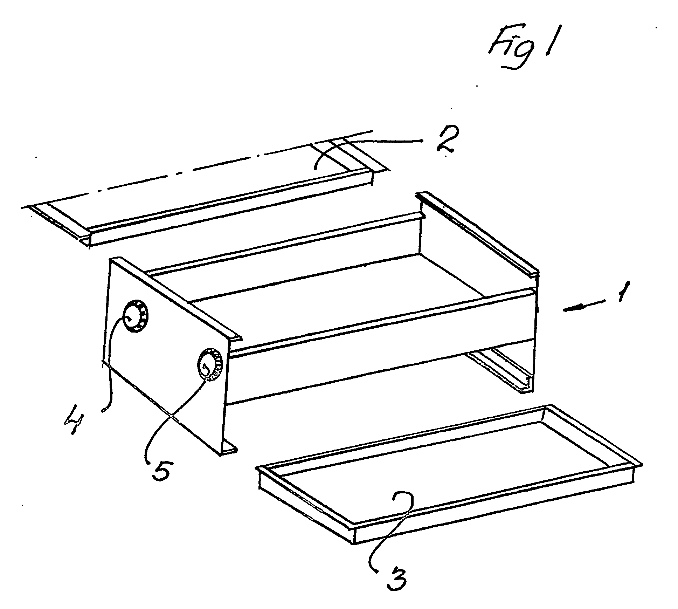

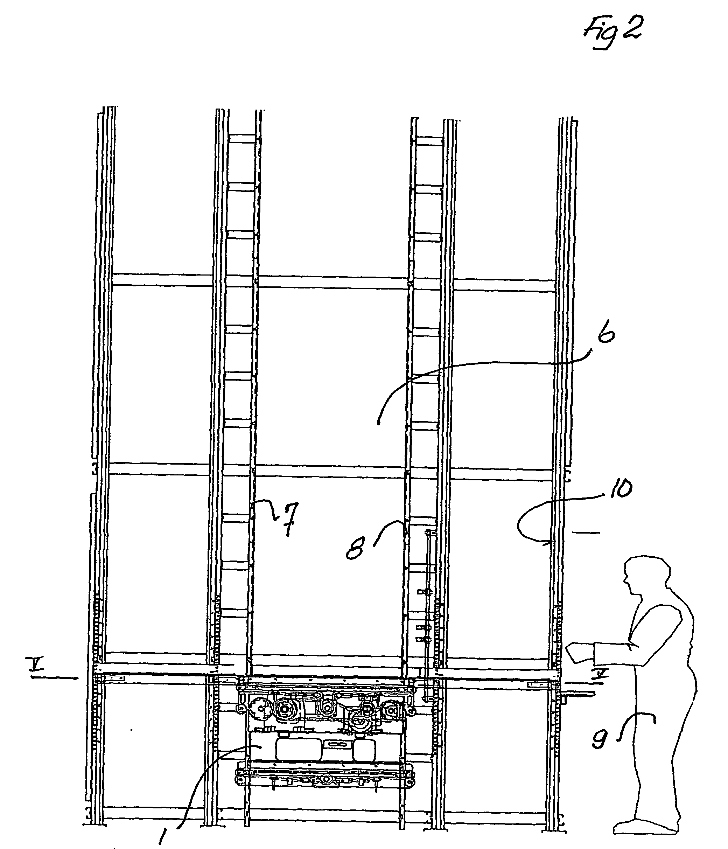

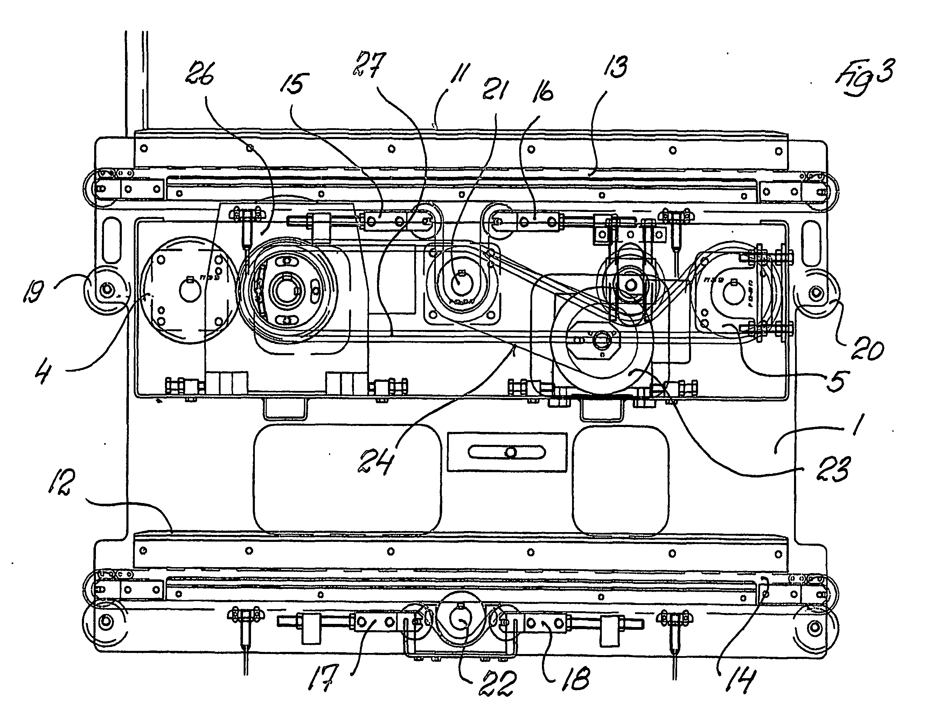

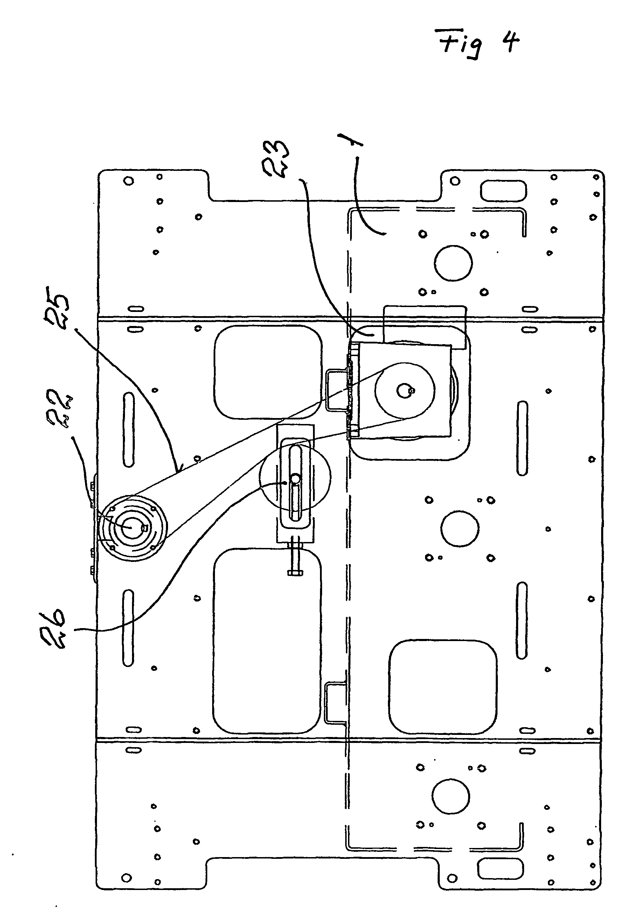

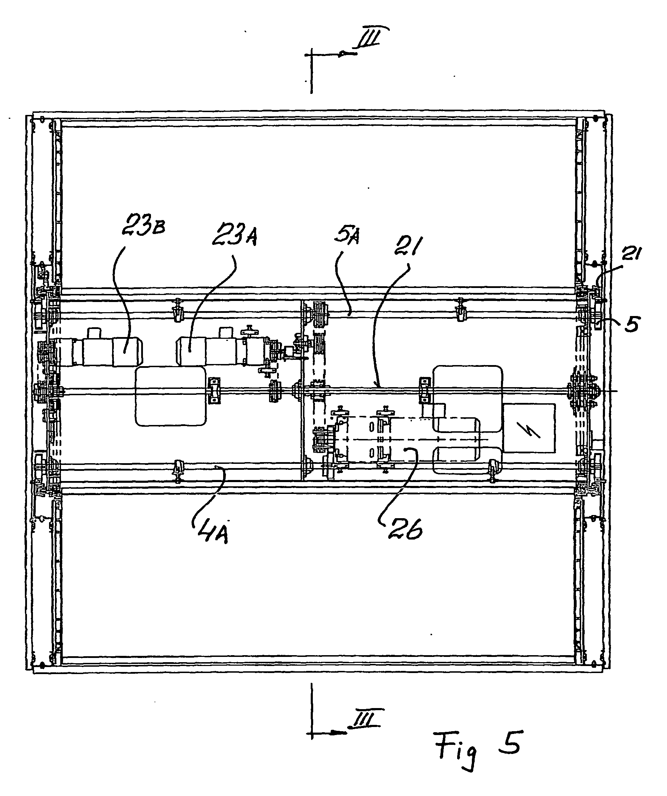

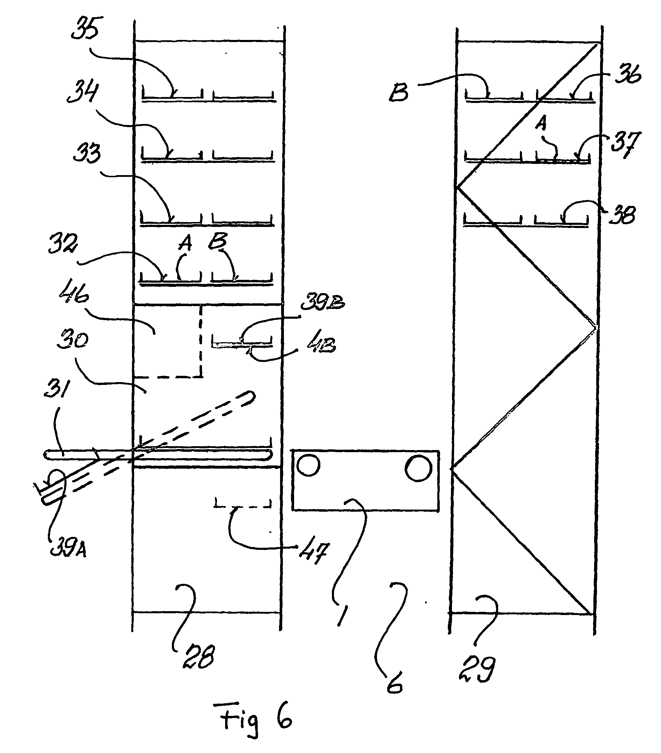

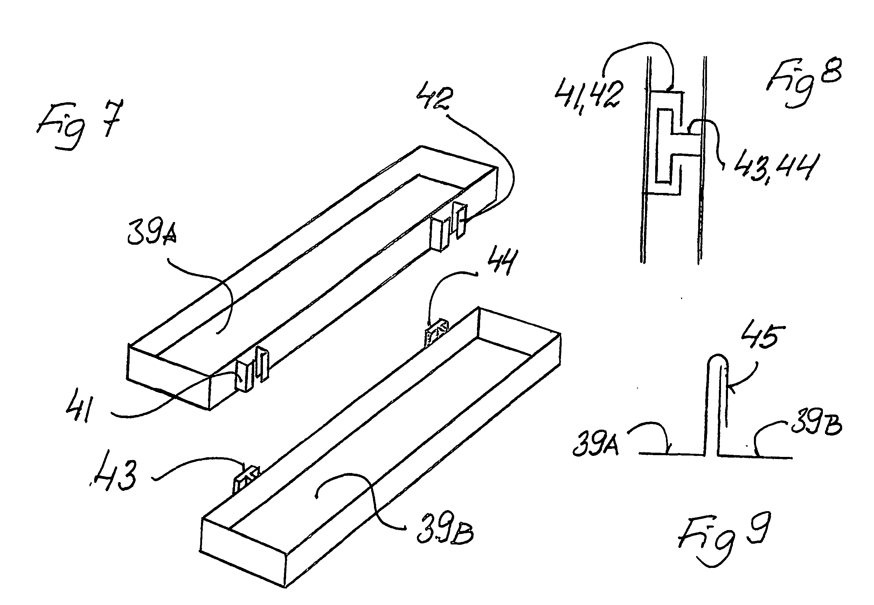

The present invention will be described in greater detail hereinbelow with reference to the accompanying drawings. Fig. 1 is a schematic perspective view of an arrangement according to one embodiment of the present invention. Fig. 2 is a side elevation of a material handling system with an arrangement according to the present invention, parts having however been omitted for purposes of clarity. Fig. 3 is a side elevation on a larger scale of the hoist basket included in the material handling system in the direction of the arrows III - III in Fig. 5. Fig. 4 is a side elevation of parts of the hoist basket according to Fig. 3 on a slightly larger scale. Fig. 5 is a view taken along the line V - V in Fig. 2. Fig. 6 is a schematic view from the side of a material handling system with an arrangement according to one embodiment of the present invention. Fig. 7 is a perspective end elevation of one embodiment of an arrangement according to the present invention in greater detail with the parts displaced from one another in the vertical direction. Fig. 8 shows a detail of the embodiment of Fig. 7 from above. Fig. 9 is a view of an arrangement according to another embodiment of the present invention.

One embodiment of an arrangement according to the present invention will be described in greater detail with reference to the material handling system illustrated in Fig. 2. In a material handling system of the type illustrated in Fig. 2 and in accordance with the state of the art, a hoist basket works reciprocatingly up and down in a shaft, and the hoist basket can collect a tray from the one side of the hoist shaft or a tray from the other side of the hoist shaft in that the tray is, in a per se known manner, drawn in on or into the hoist basket whereupon the hoist basket is displaced up or down in the hoist shaft until the collected tray is flush with a working table at a working opening where the tray may be displaced out from the hoist basket and presented to an operator. An operator picks articles from the tray and when the operator has finished the picking operation, the picking is receipted whereafter the tray is drawn back in or onto the hoist basket which places the tray back in or on its storage point. Thereafter, the hoist basket is moved in the hoist shaft for collecting the next tray and delivery of the tray in the working opening, whereafter the operator picks the desired number of articles and thereafter receipts the operation for making possible return of the tray to its storage point. In such a material handling system, the operator himself can choose which tray is to be collected by the hoist basket, or the system may be more sophisticated so that a computer determines which trays are to be handled and presented to the operator.

Fig. I is a schematic, perspective view of a hoist basket 1 which is intended for an upper tray 2 and a lower tray 3. Thus, the hoist basket has the possibility of collecting two trays 2 and 3 and moving them simultaneously in a hoist shaft, The hoist basket 1 illustrated in Fig. 1 is intended to work in a hoist shaft with a gear rack in each corner for cooperation each with its gear wheel 4 and 5. The hoist basket 1 may be disposed to cooperate with other drive and control means than a gear rack in each corner of a hoist shaft 6, e.g. ball screws, ropes, hydraulic devices, chains etc. Instead of one device in each corner, there may, for example, be two gear racks on each side of the hoist basket, but the employment of one gear rack in each corner has proved to be particularly advantageous.

Within the scope of the present invention, there is also the possibility of modifying the hoist basket 1 for more than one upper tray 2 and/or a lower tray 3 with the aid of int. al. suitable drive and connection devices as well as control devices therefor.

Fig. 2 shows a material handling system of per se known type but with a hoist basket 1 according to the present invention. The hoist basket 1 is reciprocally displaceable up and down in the hoist shaft 6 which may be considered as being formed by one gear rack in each corner, only two gear racks 7 and 8 being shown in Fig. 2. In the material handling system in Fig. 2, an operator is shown in front of a working opening 10. Both above and below the working opening 10, it is possible to store trays which are intended for different types of articles. The space on the other side of the hoist basket 1, i.e. in register with the working opening 10, is also intended for the storage of trays 2 and 3 with articles of different types.

The hoist basket 1 is shown in greater detail in Figs. 3 and 4. The hoist basket 1 has upper rails 11 and lower rails 12 for an upper tray 3 and a lower tray 2, respectively. Further, the hoist basket 1 has an upper tray handling chain 13 and a lower tray handling chain 14. There are chains 13 and 14 on both sides of the trays 2 and 3. The upper chains 13 are disposed to cooperate with clamping devices 15, 16 and the lower chains 14 are disposed to cooperate with clamping devices 17 and 18.

The driving gear wheels 4, 5 are also shown in Fig. 5 and are co-ordinated with guide or clamping wheels 19, 20, the gear racks 7, 8 extending between the gear wheels 4 and 5 and the guide wheels 19 and 20. The gear wheels 4 and 5 are each secured on the ends of their shaft 4A and 5A. The upper chains 13 are driven via a drive shaft 21 and the lower chains 14 are driven via a lower drive shaft 22. The shafts 21 and 22 are each driven by their electric motor 23A and 23B, a drive chain 24 extending between the drive motor 23A and the drive shaft 22, and a drive chain 25 extending between the drive motor 23B and the drive shaft 22.

The chain 25 is disposed to cooperate with a clamping device 26. The different shafts 4A, 5A, 21, 22 are naturally journalled in bearings suitable for the purpose, as intimated in Fig. 5.

For displacement of the hoist basket 1 along the gear racks 7 and 8, the shafts 4A and 5A are driven with the gear wheels 4 and 5 with the aid of a motor 26 via a drive gear wheel 26A on the drive shaft 4A and a drive chain 27 which extends to a chain wheel on the drive shaft 5A, possibly via a tightener wheel or jockey.

A hoist basket 1 according to the present invention makes possible the utilisation of two trays 2, 3 on levels all the way down to floor level, whereby the storage space is increased considerably. With a hoist basket 1 according to the present invention, it is moreover possible to cause the hoist basket 1 to collect and deliver a first tray to the operator 9. The hoist basket 1 may be displaced for collecting a second tray as soon has it has deposited the first tray with the operator 9. As soon as the second tray has been collected, the hoist basket 1 may possibly position itself in a holding position, e.g. at the working opening 10, until the operator 9 has receipted the first tray. As soon as receipting has taken place, the hoist basket 1 collects the first tray, draws in the tray on or into the hoist basket 1 and moves so that the second tray arrives at the correct level for outward displacement to the operator 9. The hoist basket 1 can thereafter return the first tray to its storage position and possibly collect a third tray and position itself in a new holding position at the opening until the operator 9 has receipted the second tray. As soon as receipting has taken place, the hoist basket 1 draws in the second tray in to or on the same and moves for depositing the third tray to the operator 9 and return the second tray to its storage position, whereafter the hoist basket 1 collects a fourth tray and assumes its holding position at the working opening 10 until the operator 9 has receipted the third tray, and so on.

Possibly, the working opening 10 may be disposed to receive more than one tray and, in such an event, has means for displacing the trays to the desired working position and desired holding position. It may be possible to drive the shafts 21 and 22 by a common drive motor, in which event the dogs of the chains which are not to collect a tray are deactivated.

Fig. 6 schematically shows a material handling system with one embodiment of the arrangement according to the present invention. The material handling system illustrated in Fig. 6 is of in principle the same type as that described above with reference to Fig. 2. On the one side of the hoist shaft 6, there is disposed a frame 28, and on the other side of the hoist shaft 6, there is disposed a frame 29 for storing material trays.

The one frame 28 is provided with a material picking position 30 which possibly has a deposition platform or an offload table 31. The frames 28 and 29 are intended for storing a relatively large number of material storage trays 32, 33, 34, 35, 36, 37, 38, 39, and has a rail on each side of the trays 32 - 39 on which rails the trays 32 - 39 are displaceable into and out from their storage position in the frame 28, 29. The trays 32 - 39 may be of different types. Most common is a whole tray which is illustrated by reference numeral 40 on the table 31.

Prior art material handling systems have trays of the type carrying reference numeral 40 in Fig. 6 which have substantially the same depth as the frames 28 and 29 and a suitable width of perhaps 1,000 - 2,4000 mm (most commonly 1,200 mm and 2,400 mm) or more or less, depending on the field of application. The prior art tray 40 is shown in the material picking position 30 only with a view to illustrating that material at the edge located most proximal the shaft 6 will be very difficult to reach without special measures or aids, in particular in those cases when the tray 40 is of maximum depth.

According to the present invention, the trays 32 - 39 are to be divided into a front tray section 39A and a rear tray section 39B. The tray sections 39A and 39B are shown in greater detail in Fig. 7. The front trays section 39A has connecting means 41 and 42 on that edge which is turned to face towards the tray section 39B, while the tray section 39B has connecting means 43 and 44 for cooperation with the connecting means 41 and 42 on the tray section 39A. The connecting means 41, 42 are so-called female parts while the connecting means 43, 44 are so-called male parts which are T-shaped and are insertable in the female parts 41, 42 from above and/or from beneath. In Fig. 8 it is shown more closely how the connecting means 41, 42 cooperate with the connecting means 43, 44. It is naturally of great importance that the interconnection between the two tray sections 39A and 39B does not jam in any way, since the connection between the tray sections must be achieved in an extremely simple and frictionless manner, like disconnection of the tray sections 39A, 39B from each other.

Fig. 9 exemplifies further one embodiment of the connecting means 41 - 44 between the tray section 39A and the tray section 39B. According to Fig. 9, the whole or parts of the edge of the tray section 39A are bent over so that the edge of the tray section 39B can grasp in under the bends 45 thus formed when it is moved in to it or them from beneath. It is naturally within the scope of the present invention to use other types of connecting means than those above-mentioned and illustrated, for example holes/buttons, dovetails/dovetail grooves etc.

By the hoist basket 1, a double tray or the tray sections 39A, 39B if the product or products which are needed are located on the tray section 39B is collected and moved with the hoist basket to the level of the deposition point 48 where the tray section 39A is deposited, whereafter the hoist basket 1 is moved further downwards flush with the table 31. The disconnection of the tray section 39B takes place fully automatically by continued lowering of the hoist basket after the sliding in of the tray section 39A on the deposition point 47 or 48, and thereafter the tray section 39B can be placed on the table top 31 in a suitable position in order that products can be picked from it. Possibly, the table top 31 may be adjustable as is shown by broken lines, whereby the tray section 39B can be placed in possibly an even better picking position, hence from the ergonomical viewpoint. By the division of the trays into sections A and B, a further space will be obtained in the frame 28 where, for example, it is possible to place an electronics cabinet 46. Between the cabinet 46 and the shaft 6, it is appropriate to arrange a temporary deposition point 48 for the tray section 39A which is collected after completed work with the tray section 39B and drawing in thereof into the hoist basket 1, the tray section 39A being collected on the way up in the shaft.

The temporary deposition point can naturally also be disposed beneath the table top 31 as is intimated by means of broken lines at 47. It is also possible to dispense with the temporary deposition point in that the ordinary tray deposition point in the frame 28, 29 is used in such a manner that the one tray section A is not taken in onto the hoist basket 1.

With the aid of the arrangement according to the present invention, it is possible to build up a material handling system with unexpected combination possibilities for as rational material handling as possible. The hoist basket 1 may be intended for handling a complete tray or two complete trays and/or tray sections or four tray sections, or even more if desired. It is also conceivable to have several picking openings, e.g. an upper and a lower picking opening, the one tray section A being presented in the one picking opening and the other tray section B in the other picking opening.

Many modifications are naturally possible without departing from the scope of the inventive concept as this is defined in the appended claims.

## Claims

1. A material handling system comprising a frame(28,29) on one or both sides of a hoist shaft (6), a plurality of material storage trays (2, 3, 32-39) , the frame(28,29) including a plurality of storage points for receiving the material storage trays(2,3,32-39) therein, a hoist basket(1) for collecting, transporting and depositing the trays(2,3,32-39) on a material picking point(10,30) or in the storage points, the hoist basket(1)having means for independently carrying trays(2,3,32-39) and for transferring the trays(2,3,32-39) to and from the picking point(10,30) and/or the storage points, the hoist basket (1) including means for handling a plurality of trays, **characterised in that** the hoist basket includes a set of gripping and transferring means disposed one above the other.

2. A material handling system as claimed in claim 1, **characterised in that** said means (11, 12, 13, 14) for handling the trays (2, 3, 32-39) are disposed on the upper side of the hoist basket (1) and on the underside of the hoist basket (1).

3. A material handling system as claimed in any of the preceding claims, **characterised in that** said means (11, 12, 13, 14) for handling the trays (2, 3, 32-39) have each or jointly a drive unit (23, 21, 24, 22, 25).

4. A material handling system as claimed in any of the preceding claims, **characterised in that** said means (11, 12, 13, 14) are disposed to permit simultaneous and/or separate handling of the trays (2, 3, 32-39) in the two levels.

5. A material handling system as claimed in claim 1, **characterised in that** the trays (32-39) are divided into a first tray section (A) and a second tray section (B); and that the tray sections (A, B) are provided with means (41-44) for interconnecting the tray sections (A, B) with one another.

6. A material handling system as claimed in claim 5, **characterised in that** the shaft (6) is provided with one or more deposition points (47, 48) for the first tray section (A).

7. A material handling system as claimed in claim 5, **characterised in that** said means for interconnecting the tray sections (A, B) are disposed on the mutually facing edges of the tray sections (A, B).

8. A material handling system as claim in claim 6, **characterised in that** said means for interconnecting the tray sections (A, B) are insertible in and removable out of one another on displacement of the hoist basket (1) in the shaft (6) upwards and/or downwards.

9. A material handling system as claimed in claim 6, **characterised in that** said means for interconnecting the tray sections are in the form of a male part (43, 44) on the one tray section and in the form of a female part (41, 42) on the other tray section.

## Patentansprüche

1. Materialflusssystem mit einem Gestell (28, 29) auf einer oder beiden Seiten eines Hebeschachts (6), mehreren Materiallagerschalen (2, 3, 32 - 39), wobei das Gestell (28, 29) mehrere Lagerpunkte zur Aufnahme der Materiallagerschalen (2, 3, 32 - 39) aufweist, und einem Hebekorb (1) zum Abholen, Transportieren und Ablegen der Schalen (2, 3, 32 - 39) an einem Materialkommissionierpunkt (10, 30) oder an den Lagerpunkten, wobei der Hebekorb (1) Mittel aufweist, um die Schalen (2, 3, 32 - 39) unabhängig zu tragen und sie zum Kommissionierpunkt (10, 30) und/oder zu den Lagerpunkten hin- und von ihnen weg zu transferieren, sowie Mittel für die Handhabung mehrerer Schalen, **dadurch gekennzeichnet, dass** der Hebekorb einen Satz Greif- und Transfermittel aufweist, die übereinander angeordnet sind.

2. Materialflusssystem nach Anspruch 1, **dadurch gekennzeichnet, dass** die Mittel (11, 12, 13, 14) zur Handhabung der Schalen (2, 3, 32 - 39) auf der Oberseite des Hebekorbs (1) und auf der Unterseite des Hebekorbs (1) angeordnet sind.

3. Materialflusssystem nach einem der vorhergehenden Ansprüche, **dadurch gekennzeichnet, dass** die Mittel (11, 12, 13, 14) zur Handhabung der Schalen (2, 3, 32 - 39) jeweils eine oder gemeinsam eine Antriebseinheit (23, 21, 24, 22, 25) aufweisen.

4. Materialflusssystem nach einem der vorhergehenden Ansprüche, **dadurch gekennzeichnet, dass** die Mittel (11, 12, 13, 14) so angeordnet sind, dass sie gleichzeitige und/oder getrennte Handhabung der Schalen (2, 3, 32 - 39) auf zwei Höhen gestatten.

5. Materialflusssystem nach Anspruch 1, **dadurch gekennzeichnet, dass** die Schalen (32 - 39) in einen ersten Schalenabschnitt (A) und einen zweiten Schalenabschnitt (B) unterteilt sind und dass die Schalenabschnitte (A, B) mit Mitteln (41 - 44) versehen sind, um die Schalenabschnitte (A, B) miteinander zu verbinden.

6. Materialflusssystem nach Anspruch 5, **dadurch gekennzeichnet, dass** der Schacht (6) mit einem oder mehreren Ablagepunkten (47, 48) für den ersten Schalenabschnitt (A) versehen ist.

7. Materialflusssystem nach Anspruch 5, **dadurch gekennzeichnet, dass** die Mittel zum Verbinden der Schalenabschnitte (A, B) an den sich gegenüberliegenden Rändern der Schalenabschnitte (A, B) angeordnet sind.

8. Materialflusssystem nach Anspruch 6, **dadurch gekennzeichnet, dass** die Mittel zum Verbinden der Schalenabschnitte (A, B) ineinander einführbar und auseinander entfernbar sind, wenn der Hebekorb (1) im Schacht (6) nach oben und/oder unten gefahren wird.

9. Materialflusssystem nach Anspruch 6, **dadurch gekennzeichnet, dass** die Mittel zum Verbinden der Schalenabschnitte die Form eines Steckteils (43, 44) an dem einen Schalenabschnitt und die Form eines Aufnahmeteils (41, 42) an dem anderen Schalenabschnitt haben.

## Revendications

1. Système de manipulation de matériaux, comprenant un châssis (28, 29) d'un ou des deux côtés d'une cage de levage (6), une pluralité de plateaux d'entreposage de matériaux (2, 3, 32-39), le châssis (28, 29) comportant une pluralité de points d'entreposage pour y recevoir les plateaux d'entreposage de matériaux (2, 3, 32-39), un panier de levage (1) pour enlever, transporter et déposer les plateaux (2, 3, 32-39) sur un point de ramassage de matériaux (10, 30) ou dans les points d'entreposage, le panier de levage (1) étant doté de moyens de transport indépendant de plateaux (2, 3, 32-39) ou de transfert des plateaux (2, 3, 32-39) vers ou depuis le point de ramassage (10, 30) et/ou les points d'entreposage, le panier de levage (1) comportant des moyens de manipulation d'une pluralité de plateaux, **caractérisé en ce que** le panier de levage comporte un ensemble de moyens d'accrochage et de transfert disposés les uns au-dessus des autres.

2. Système de manipulation de matériaux selon la revendication 1, **caractérisé en ce que** lesdits moyens (11, 12, 13, 14) de manipulation des plateaux (2, 3, 32-39) sont disposés sur le côté supérieur du panier de levage (1) et sur le dessous du panier de levage (1).

3. Système de manipulation de matériaux selon l'une quelconque des revendications précédentes, **caractérisé en ce que** lesdits moyens (11, 12, 13, 14) de manipulation des plateaux (2, 3, 32-39) possèdent chacun ou partagent une unité d'entraînement (23, 21, 24, 22, 25).

4. Système de manipulation de matériaux selon l'une quelconque des revendications précédentes,
**caractérisé en ce que** lesdits moyens (11, 12, 13, 14) sont disposés de façon à permettre la manipulation simultanée et/ou séparée des plateaux (2, 3, 32-39) dans les deux niveaux.

5. Système de manipulation de matériaux selon la revendication 1, **caractérisé en ce que** les plateaux (32-39) sont séparés en une première section à plateaux (A) et une deuxième section à plateaux (B) ; et **en ce que** les sections à plateaux (A, B) sont pourvues de moyens (41-44) d'assemblage mutuel des sections à plateaux (A, B).

6. Système de manipulation de matériaux selon la revendication 5, **caractérisé en ce que** l'arbre (6) est pourvu d'un ou de plusieurs points de dépose (47, 48) pour la première section à plateaux (A).

7. Système de manipulation de matériaux selon la revendication 5, **caractérisé en ce que** lesdits moyens d'assemblage mutuel des sections à plateaux (A, B) sont disposés sur les bords en regard des sections à plateaux (A, B).

8. Système de manipulation de matériaux selon la revendication 6, **caractérisé en ce que** lesdits moyens d'assemblage mutuel des sections à plateaux (A, B) peuvent être insérés les uns dans les autres et extraits les uns des autres lors de la montée et/ou de la descente du panier de levage (1) dans la cage (6).

9. Système de manipulation de matériaux selon la revendication 6, **caractérisé en ce que** lesdits moyens d'assemblage mutuel des sections à plateaux prennent la forme d'une pièce femelle (43, 44) sur une section à plateaux et la forme d'une pièce mâle (41, 42) sur l'autre section à plateaux.
